# EUROPEAN PATENT APPLICATION

(11) **EP 4 675 749 A2**
(43) Date of publication of application: **07.01.2026**
(21) Application number: 25182121.1
(22) Date of filing: 11.06.2025
(51) Int. Cl.: H01M 10/14, H01M 50/46, H01M 50/477

(54) **ELECTRODE ASSEMBLY INCLUDING ADHESIVE COATING LATER AND METHOD OF MANUFACTURING SAME**

(30) Priority: 04.07.2024 KR 20240088538
(71) Applicant: SAMSUNG SDI CO., LTD., Yongin-si, Gyeonggi-do 17084 (KR)
(72) Inventor: KIM, Kyunggeun, Yongin-si, Gyeonggi-do 17084 (KR)
(74) Representative: Gulde & Partner

(57) **Abstract**

An electrode assembly includes a separator, a first electrode on a first side surface of the separator, a first electrode tab extending from an upper outer periphery of the first electrode, a second electrode on a second side surface of the separator opposite to the first side surface, a second electrode tab extending from an upper outer periphery of the second electrode, and a first adhesive coating layer, wherein the first adhesive coating layer partially covers an upper portion of the separator.

## Description

### BACKGROUND

### 1. Field

Aspects of some embodiments of the present disclosure relate to an electrode assembly including an adhesive coating layer and a method of manufacturing the electrode assembly.

### 2. Description of the Related Art

Unlike primary batteries that are not designed to be (re)charged, secondary (or rechargeable) batteries are batteries that are designed to be discharged and recharged. Lowcapacity secondary batteries are used in portable, small electronic devices, such as smart phones, feature phones, notebook computers, digital cameras, and camcorders, while largecapacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Secondary batteries are used in a variety of environments due to their excellent electrical properties. During the charging and discharging processes of secondary batteries, the volume of battery cells, e.g. in the form of a jellyroll, in the secondary battery may increase or decrease due to changes in chemical energy as ions transfer electrical energy by moving through the battery. Repeated contraction and expansion during the charging and discharging processes may cause uneven mechanical stress on the inside of the secondary battery, which may shorten the longevity of the battery and may lead to a decrease in battery performance through structural loss.

In particular, short circuits caused by deformation or breakage of the separators or insulators separating the positive electrode and the negative electrode of the electrode assembly may cause abnormal current flow, thereby resulting in damage to internal components due to overheating, which in turn may increase the risk of explosion or fire of the secondary battery.

The above information disclosed in this Background section is for enhancement of understanding of the background of the present disclosure, and therefore, it may contain information that does not constitute related (or prior) art.

### SUMMARY

The present disclosure concerns an electrode assembly, a battery including the same and a method of manufacturing the electrode assembly that may be capable of solving the above-described technical problems.

These and other aspects and features of the present disclosure will be described in or will be apparent from the following description of embodiments of the present disclosure.

According to an aspect of the present disclosure, an electrode assembly includes a separator, a first electrode on or adjacent on a first side surface of the separator, a first electrode tab extending from an upper outer periphery of the first electrode, a second electrode on or adjacent on a second side surface of the separator opposite to the first side surface, and a second electrode tab extending from an upper outer periphery of the second electrode. The electrode assembly includes a first adhesive coating layer. The first adhesive coating layer at least partially or even completely covers an upper portion of the separator. Hence, as the first adhesive coating layer partially covers an upper portion of the separator, movements of the electrodes and the separator are at least partly limited, which reduces wear and tear and increases the lifetime of the electrode assembly.

The following embodiments of the electrode assembly may be combined as desired.

According to some embodiments, the first adhesive coating layer may include an ionomer. An advantage of this embodiment may be that the first adhesive coating layer maintains adhesion even when it is heated and then cools down again during operation of the electrode assembly, e.g. in a secondary battery.

According to some embodiments, the ionomer may include a copolymer of ethylene and methyl acrylic acid. An advantage of this embodiment may be that the first adhesive coating layer is electrochemically stable.

According to some embodiments, the glass transition temperature of the ionomer may range from 100 °C to 150 °C. For example, the glass transition temperature may be at least 100 °C and/or up to 110 °C, 120 °C, 130 °C, 140 °C or 150 °C. An advantage of this embodiment may be that the first adhesive coating layer can be processed at moderate temperatures.

According to some embodiments, the first electrode may include a first substrate disposed on an outer side surface of the electrode assembly and a first active material applied to an inner surface of the first substrate. The first substrate may be adjacent to or may be arranged adjacent to or may be directly arranged adjacent to a case exterior material. The outer side surface may face the case exterior material. The inner side surface may face away from the outer surface. An advantage of this embodiment may be that the first active material is hindered from contacting the case exterior material.

According to some embodiments, the electrode assembly may further include a second adhesive coating layer. The second adhesive coating layer may be between or may be arranged between at least a portion of an outer periphery of the first substrate and the case exterior material. At least a part of the second adhesive coating layer may be arranged between at least a part of the outer periphery of the first substrate and the case exterior material. An advantage of this embodiment may be that movements of the electrode assembly relative to the case exterior material may be hindered or at least reduced.

According to some embodiments, the first adhesive coating layer may be between or may be arranged between an upper portion of the first side surface of the separator and an upper portion of an inner surface of the first substrate. An advantage of this embodiment may be that the first adhesive coating leaves more surface area for the active material.

According to some embodiments, the second electrode may include a second substrate on an inner portion of the electrode assembly and a second active material applied to two side surfaces of the second substrate. An advantage of this embodiment may be that by providing active material on two sides, more active material can be provided.

According to some embodiments, the first adhesive coating layer may be between or arranged between an upper portion of the second side surface of the separator and an upper portion of an inner surface of the second substrate. An advantage of this embodiment may be that the first adhesive coating leaves more surface area for the active material.

According to some embodiments, the electrode assembly may further include a third adhesive coating layer. The third adhesive coating layer may be adjacent or arranged adjacent to at least one of an extension of the first electrode tab or an extension of the second electrode tab. For example, more than one third adhesive coating layer may be provided. One of the third adhesive coating layers may be adjacent or arranged adjacent to the extension of the first electrode tab. Another one of the third adhesive coating layers may be adjacent or arranged adjacent to the extension of the second electrode tab. An advantage of this embodiment may be that relative moments may be further reduced.

According to some embodiments, the third adhesive coating layer or one of the third adhesive coating layers, e.g. the one of the third adhesive coating layers, may be between or arranged between the extension of the first electrode tab and the separator. An advantage of this embodiment may be that relative movements of the first electrode tab and the separator are further reduced.

According to some embodiments, the third adhesive coating layer or one of the third adhesive coating layers, e.g. the other one of the third adhesive coating layers, may be between or arranged between the extension of the second electrode tab and the separator. An advantage of this embodiment may be that relative movements of the second electrode tab and the separator are further reduced.

According to another aspect of the present disclosure, a secondary battery may include the electrode assembly, in particular the electrode assembly according to the previous aspect or an embodiment thereof.

According to yet another aspect of the present disclosure, in a method of manufacturing an electrode assembly, e.g. the electrode assembly of the previous aspect or an embodiment thereof, may include heating a thermoplastic polymer to a temperature equal to or higher than a glass transition temperature, arranging the heated polymer on an upper portion of a separator, and attaching the polymer to the separator by contact with a hot plate. Hence, as the first adhesive coating layer partially covers an upper portion of the separator, movements of the electrodes and the separator are at least partly limited, which reduces wear and tear and increases the lifetime of the electrode assembly. Arranging the adhesive layer may be particularly easy when providing the adhesive layer as the heated thermoplastic polymer.

The following embodiments of the method may be combined as desired.

According to some embodiments, the operation of disposing the polymer on the upper portion of the separator may include extruding the heated polymer onto an upper portion of a first electrode using a nozzle. The operation of disposing may include stacking the separator on the first electrode. An advantage of this embodiment may be that extruding can be done precisely such that the desired amount of polymer is placed in the desired area on the separator, wherein the first electrode can be placed to be stacked easily, optionally with the active material applied on the first substrate beforehand or even afterwards.

According to some embodiments, the first electrode may include a first substrate on an outer side surface of the electrode assembly and a first active material applied to an inner surface of the first substrate, and in the operation of extruding the heated polymer onto the upper portion of the first electrode using the nozzle, the polymer may be extruded onto at least a portion of an outer periphery of the first substrate. An advantage of this embodiment may be that movements of the electrode assembly relative to the case exterior material may be hindered or at least reduced.

According to some embodiments, a first electrode tab extending from an upper outer periphery of the first electrode may include an extension, and in the operation of extruding the heated polymer onto the upper portion of the first electrode using the nozzle, the polymer may be extruded onto an extension of the first electrode tab. An advantage of this embodiment may be that relative moments may be further reduced.

According to some embodiments, the operation of heating the thermoplastic polymer to the temperature equal to or higher than the glass transition temperature may include applying hot air to the film-shaped polymer. An advantage of this embodiment may be that hot air is easy to provide within a production or manufacturing process.

According to some embodiments of the the method, the width of the hot plate may correspond to the width of a first adhesive coating layer on which the polymer is arranged. An advantage of this embodiment may be that application of heat can be limited to areas where it is required to heat the first adhesive coating layer.

The embodiments of the electrode assembly and/or the method may provide the advantage that the first adhesive coating layer may be arranged to partially cover the upper portion of the separator where cracks or tears are consistently found during the charging and discharging processes of the secondary battery electrode assembly, which may thereby prevent or reduce instances or degrees of cracks occurring and may relatively improve the durability and longevity of the electrode assembly.

The embodiments of the electrode assembly and/or the method may provide the advantage that an improvement in the insulating properties of the separator and an improvement in the physical adhesion between the electrode and the separator may be induced, thereby relatively reducing or preventing deformation of the separator even in extreme environments such as high temperature environments.

The embodiments of the electrode assembly and/or the method may provide the advantage that the longevity of the secondary battery may also be positively influenced by improved thermal stability of the electrode assembly and improved adhesion characteristics near the tabs.

The embodiments of the electrode assembly and/or the method may provide the advantage that the adhesive coating layer may relatively improve the adhesion between the separators and compensate for or eliminate stepped portions that are inevitably formed during the manufacturing of the electrode assembly, thereby relatively improving the flatness of the secondary battery so that pressure may be uniformly applied to the secondary battery in the subsequent process or the like.

However, aspects and characteristics of embodiments according to the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an exploded view showing an electrode assembly according to some embodiments of the present disclosure;
FIG. 2 illustrates a plan view showing the cross-section of an electrode assembly and a case exterior material according to some embodiments of the present disclosure;
FIG. 3 illustrates a plan view showing the cross-section of an electrode assembly and a case exterior material according to some embodiments of the present disclosure;
FIG. 4 illustrates an exploded view showing an electrode assembly and a second adhesive coating layer according to some embodiments of the present disclosure;
FIG. 5 illustrates a plan view showing the cross-section of an electrode assembly and a second adhesive coating layer according to some embodiments of the present disclosure;
FIG. 6 illustrates an exploded view showing an electrode assembly and third adhesive coating layers according to some embodiments of the present disclosure;
FIG. 7 illustrates a plan view showing the cross-section of an electrode assembly and third adhesive coating layers according to some embodiments of the present disclosure;
FIG. 8 illustrates a top plan view showing the cross-section of an electrode assembly according to some embodiments of the present disclosure;
FIG. 9 illustrates a flowchart showing an example of a method of manufacturing an electrode assembly according to some embodiments of the present disclosure;
FIG. 10 illustrates a cross-sectional view showing an example of a polymer extrusion method according to some embodiments of the present disclosure;
FIG. 11 illustrates an example of a method of manufacturing second adhesive coating layers according to some embodiments of the present disclosure;
FIG. 12 illustrates an example of a process of manufacturing third adhesive coating layers according to some embodiments of the present disclosure;
FIG. 13 illustrates an example of the contacting operation of the method of manufacturing an electrode assembly according to some embodiments of the present disclosure in a cross-sectional view; and
FIG. 14 illustrates an example of the heating operation of the method of manufacturing an electrode assembly according to some embodiments of the present disclosure in cross-sectional views.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by a person skilled in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be located or arranged in contact with the upper (or lower) surface of the element, and another element may also be interposed between the element and the arbitrary element located or arranged on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

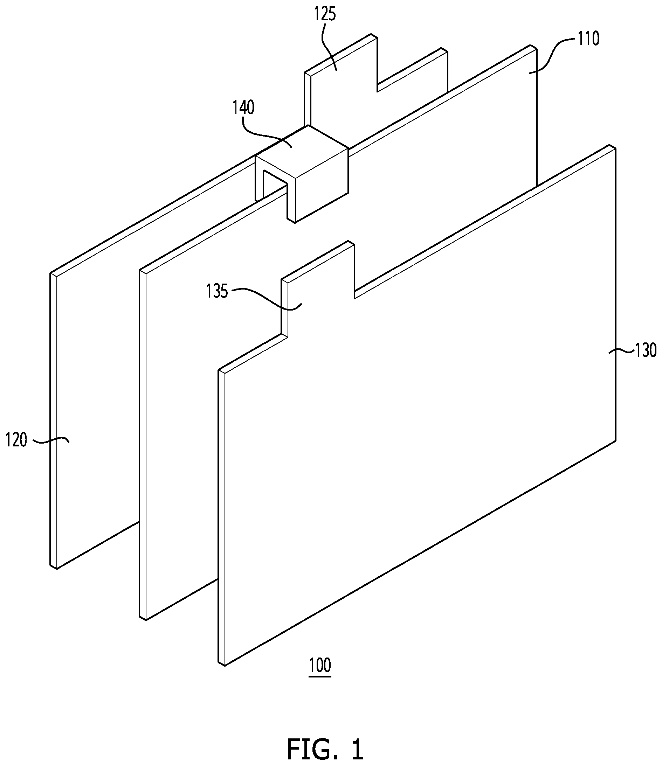

FIG. 1 illustrates an exploded view showing an electrode assembly 100 according to some embodiments of the present disclosure.

Referring to FIG. 1, an electrode assembly 100 according to some embodiments of the present disclosure may include a separator 110, a first electrode 120 located on a first side surface of the separator 110, a second electrode 130 located on a second side opposite the first side surface, and a first adhesive coating layer 140. Although the components are shown spaced apart in this exploded view for ease of illustration, in an actual electrode assembly 100 according to some embodiments of the present disclosure, the components may all be in close proximity (e.g., in contact with one another).

The first electrode 120 may be an electrode corresponding to a positive electrode or a negative electrode in a secondary battery. The second electrode 130 may be an electrode corresponding to the opposite electrode of the first electrode 120. According to some embodiments, in a case where the first electrode 120 is a positive electrode, the second electrode 130 may be a negative electrode. Conversely, in a case where the first electrode 120 is a negative electrode, the second electrode 130 may be a positive electrode.

The electrode assembly 100 may further include a first electrode tab 125 extending from the upper portion outer periphery of the first electrode 120. The electrode assembly 100 may further include a second electrode tab 135 extending from the upper outer periphery of the second electrode 130. The first electrode tab 125 may be shaped to extend from an uncoated portion of the first electrode 120 to which no active material is applied. Similarly, the second electrode tab 135 may be shaped to extend from an uncoated portion of the second electrode 130 to which no active material is applied.

The first electrode tab 125 may be an electrode corresponding to a positive electrode tab or a negative electrode tab in the secondary battery. The second electrode tab 135 may also be an electrode tab corresponding to an opposite electrode of the first electrode tab 125.

According to some embodiments, the first adhesive coating layer 140 may be shaped to cover a portion of the upper portion of the separator 110 that is not in contact with the first electrode tab 125. According to some embodiments, the first adhesive coating layer 140 may be shaped to cover a portion of the upper portion of the separator 110 that is not in contact with the second electrode tab 135.

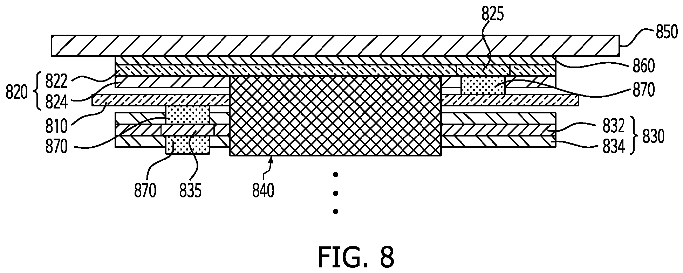

That is, the first adhesive coating layer 140 may be arranged to be in contact with a portion of the upper outer periphery of the first electrode 120 that is not connected to the first electrode tab 125. The first adhesive coating layer 140 may also be arranged to be in contact with a portion of the upper outer periphery of the second electrode 130 that is not connected to the second electrode tab 135. This will be described in more detail with reference to FIG. 8.

The first adhesive coating layer 140 may include a polymeric material that has adhesive properties in a case of being heated. According to some embodiments, the first adhesive coating layer 140 may include an ionomer. For example, an ionomer may refer to a polymer such as a copolymer of ethylene and methyl acrylic acid having a carboxyl group cross-linked by a metal ion such as Na, K, Mg, Zn, or the like.

The ionomer is characterized by good adhesion to other polymers or metal foils and good adhesion to oil or grease. The proportion of methyl acrylic acid or methyl acrylate salt in the ionomer according to some embodiments is 4% to 15% (or about 4% to 15%), and the lower the proportion of methyl acrylic acid or methyl acrylate, the lower the metal adhesion, stiffness, and permeability may be, but the higher the adhesive strength may be.

In a case where the ionically cross-linked molecules are heated to a temperature (e.g., a set or predetermined temperature) or higher, the first adhesive coating layer 140 including an ionomer may exhibit thermal adhesion due to crosslink breakage. Accordingly, heating the polymer of the first adhesive coating layer 140 may improve processability to the extent that a coating layer of a desired shape may be produced. In a case where the polymer is subsequently cooled, the ionic crosslinks may be reestablished and the polymer may become rigid.

According to some embodiments of the present disclosure, the first adhesive coating layer 140 including the ionomer is electrochemically stable, has excellent mechanical properties, is oil and cold resistant, and has excellent resistance to strong acids, strong alkalis, grease oils, organic solvents and water, and may be provided on the separator as a coating layer having a desired shape of adhesion and insulation while replacing polyimide (PI) that has been conventionally used as an insulator in the field of secondary batteries.

The glass transition temperature Tg of the ionomer of the first adhesive coating layer 140 may range from 100 °C to 150 °C. For example, the glass transition temperature may be at least 100 °C and/or up to 110 °C, 120 °C, 130 °C, 140 °C or 150 °C. According to some embodiments, in a case where the glass transition temperature is equal to or lower than 100 °C, for example at least 90 °C, during thermal exposure evaluation of the electrode assembly 100, the first adhesive coating layer 140 may be revitrified and then recrystallized (e.g., ionically cross-linked) in a separate state, thereby losing the adhesion between the first electrode 120 and the separator 110 or between the second electrode 130 and the separator 110.

According to some embodiments of the present disclosure, the first adhesive coating layer 140 may be arranged to partially cover the upper portion of the separator 110 where cracks or tears are consistently found during the charging and discharging processes of the secondary battery electrode assembly 100, thereby preventing or reducing instances of cracks occurring and relatively improving the durability and longevity of the electrode assembly 100.

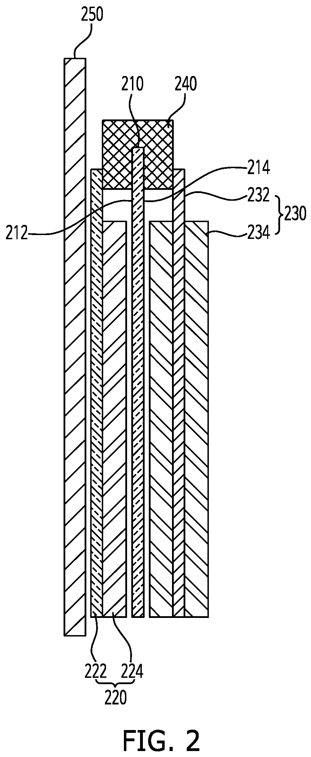

FIG. 2 illustrates a plan view showing the cross-section of an electrode assembly and a case exterior material according to some embodiments of the present disclosure.

Referring to FIG. 2, the electrode assembly according to some embodiments of the present disclosure may include a separator 210, a first electrode 220 located on a first side surface 212 of the separator 210, a second electrode 230 located on a second side 214 of the separator 210 opposite the first side surface 212, and a first adhesive coating layer 240.

According to some embodiments, the first adhesive coating layer 240 may be provided to partially cover the upper portion of the separator 210. The first adhesive coating layer 240 may include a recess shaped to allow the upper portion of the separator 210 to be inserted thereinto so that all of the first side surface 212, the second side 214, and the upper surface of the separator 210 are in contact with the first adhesive coating layer 240.

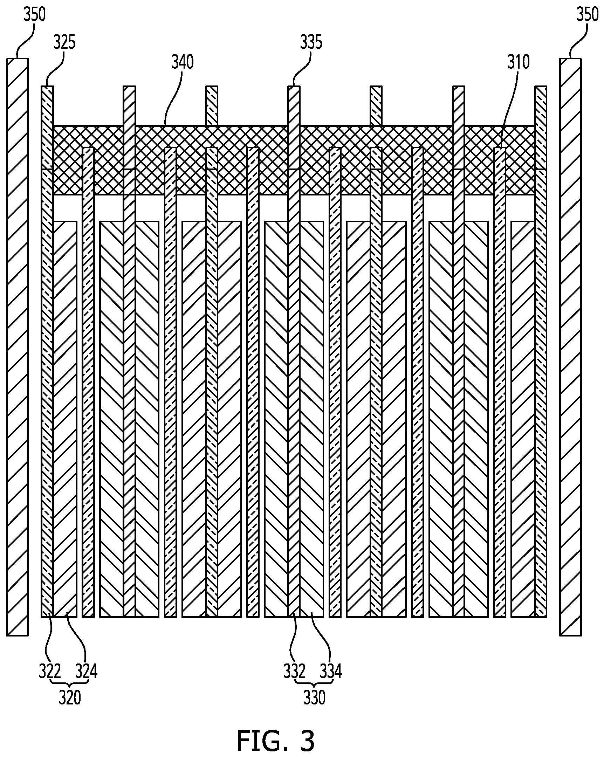

According to some embodiments, the first adhesive coating layer 240 may be shaped to partially cover the upper portion of the first electrode 220 or the upper portion of the second electrode 230 in addition to the separator 210. Accordingly, the bottom surface of the first adhesive coating layer 240 may further include a recess shaped to allow the upper portion of the first electrode 220 or the upper portion of the second electrode 230 to be inserted thereinto. This will be described in more detail later with reference to FIG. 3.

The first electrode 220 may include a first substrate 222 and a first active material coating portion 224 applied to the first substrate 222. According to some embodiments, the first electrode 220 may include a first active material coated portion 224 that is a region where the first active material is applied to the first substrate 222 formed of a thin metal foil and an uncoated portion which is a region where the first active material is not coated. Similarly, the second electrode 230 may include a second active material coated portion 234 that is a region where the second active material is applied to the second substrate 232 formed of a thin sheet of metal foil and an uncoated portion that is a region where the second active material is not coated. The first substrate 222 and the second substrate 232 may be formed of a metallic material including copper (Cu) or aluminum (Al).

According to some embodiments, the first substrate 222 of the first electrode 220 may be located on the outer portion of the electrode assembly to be adjacent to a case exterior material 250. Here, the first active material may not be applied to a region between the first substrate 222 and the case exterior material 250. That is, the first active material may only be applied to an inner surface of the first substrate 222 located on the outer portion of the electrode assembly.

The first adhesive coating layer 240 may be located between the upper portion of the first side surface 212 of the separator 210 and the upper portion of the inner surface of the first substrate 222. According to some embodiments, the first adhesive coating layer 240 may be located between the inner surface of the uncoated portion of the first substrate 222 and the first side surface 212 of the separator 210 to bond the two components to each other. Accordingly, the first substrate 222 and the separator 210 may remain unseparated from each other during warping that occurs during the charging and discharging of the electrode assembly.

The first adhesive coating layer 240 may be located between the upper portion of the second side 214 of the separator 210 and the upper portion of the inner surface of the second substrate 232. According to some embodiments, the first adhesive coating layer 240 may be located between the inner surface of the uncoated portion of the second substrate 232 and the second side 214 of the separator 210 to adhere the two configurations to each other. Accordingly, the second substrate 232 and the separator 210 may remain unseparated from each other during warping that occurs during the charging and discharging of the electrode assembly.

According to some embodiments of the present disclosure, in addition to improving the insulating properties of the separator 210, an improvement in the physical adhesion between the first electrode 220 and the separator 210 or between the second electrode 230 and the separator 210 may be induced to reduce deformation of the separator 210 even in high temperature environments.

FIG. 3 illustrates a plan view showing the cross-section of an electrode assembly and a case exterior material according to some embodiments of the present disclosure.

Referring to FIG. 3, an electrode assembly according to some embodiments of the present disclosure may be provided by stacking a plurality of first electrodes 320 and a plurality of second electrodes 330 alternately on top of each other, in which a separator 310 may be located between the first electrodes 320 and the second electrodes 330. The first adhesive coating layer 340 may be shaped to partially cover the upper portion of the separator 310 and span the upper portion of the first electrode 320 and the upper portion of the second electrode 330. The stacked electrode assembly may be inserted into a case 350.

Accordingly, the bottom surface of the first adhesive coating layer 340 may include a plurality of recesses having a concave shape to allow a portion of the upper portion of the first electrode 320 or a portion of the upper portion of the second electrode 330 to be inserted thereinto.

A plurality of protrusions corresponding to the recesses of the first adhesive coating layer 340 may be located between the upper portion of the separator 310 and the upper portion of the first electrode 320 and between the upper portion of the separator 310 and the upper portion of the second electrode 330. According to some embodiments, the recesses and protrusions of the adhesive first adhesive coating layer 340 may be arranged to conform to the shape of the upper portion of the separator 310, the upper portion of the first electrode 320, and the upper portion of the second electrode 330 to bond the respective components to each other.

According to some embodiments, the first adhesive coating layer 340 may be formed to cover a portion of the upper portion of the separator 310 that is not in contact with the first electrode tab 325. At a same time (or substantially a same time), the first adhesive coating layer 340 may be shaped to cover a portion of the upper portion of the separator 310 that is not in contact with the second electrode tab 335. That is, the first adhesive coating layer 340 may include protrusions in contact with a portion of the upper outer periphery of the first electrode 320 that is not connected to the first electrode tab 325 and other protrusions arranged to be to be in contact with a portion of the upper outer periphery of the second electrode 330 that is not connected to the second electrode tab 335.

The surfaces in contact with the respective protrusions may be an uncoated portion of the first substrate 322 of the first electrode 320 to which the first active material is not applied and an uncoated portion of the second substrate 332 of the second electrode 330 to which the second active material is not applied. The first electrode 320 may include a first active material coated portion 324 that is a region where the first active material is applied to the first substrate 322 and an uncoated portion that is a region where the first active material is not coated. Similarly, the second electrode 330 may include a second active material coated portion 334 that is a region where the second active material is applied to the second substrate 332 and an uncoated portion that is a region where the second active material is not coated.

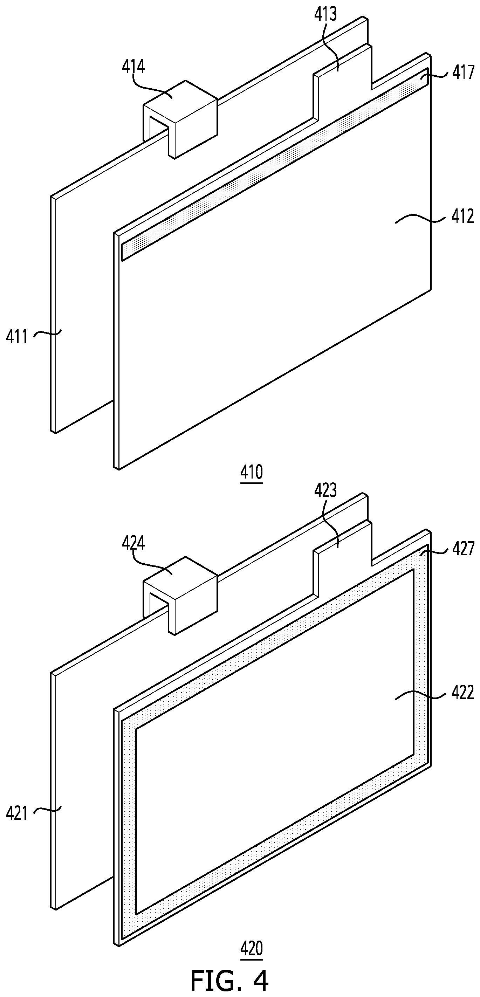

FIG. 4 illustrates an exploded view showing an electrode assembly and a second adhesive coating layer according to some embodiments of the present disclosure.

Referring to FIG. 4, the electrode assembly according to some embodiments of the present disclosure may further include second adhesive coating layers 417 and 427. The second adhesive coating layers 417 and 427 may be located on at least portions of the outer peripheries of first substrates 412 and 422, respectively. According to some embodiments, the second adhesive coating layers 417 and 427 may be located on at least portions of the outer peripheries of the first substrates 412 and 422 on at least portions of surfaces opposite the surfaces where the first adhesive coating layers 414 and 424 shaped to cover the upper portions of the separators 411 and 421 are in contact with the first substrate 412 and 422, i.e., on at least portions of the outer peripheries of the first substrates 412 and 422 facing a case exterior material. Furthermore, the second adhesive coating layers 417 and 427 may not be located on the first electrode tabs 413, 423 that protrude outside of the separator.

According to some embodiments of the present disclosure, in an electrode assembly 410, the second adhesive coating layer 417 may be located on the upper portion of the outer periphery of the first substrate 412. According to some embodiments of the present disclosure, in an electrode assembly 420, the second adhesive coating layer 427 may be arranged along the outer periphery of the first substrate 422. According to some embodiments, the second adhesive coating layers 417 and 427 may be arranged throughout the surfaces of the first substrate 412 and 422 facing the case exterior material, including the outer peripheries of the first substrate 412 and 422, as selected by a person skilled in the art.

Each of the second adhesive coating layers 417 and 427 may include a polymeric material that has adhesive properties in a case of being heated in the same manner as the first adhesive coating layer described above. According to some embodiments, the second adhesive coating layers 417 and 427 may include an ionomer. The composition and properties of the ionomer are the same as described above.

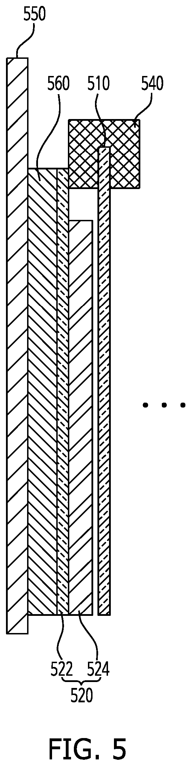

FIG. 5 illustrates a plan view showing the cross-section of an electrode assembly and a second adhesive coating layer 560 according to some embodiments of the present disclosure.

Referring to FIG. 5, a second adhesive coating layer 560 may be located between at least a portion of the outer periphery of a first substrate 522 included in a first electrode 520 and a case exterior material 550. Here, no first active material may be applied to a region between the first substrate 522 and the case exterior material 550. The second adhesive coating layer 560 is shown in FIG. 5 as being arranged on the entire outer periphery of the first substrate 522, but may also be located on only a portion of the outer periphery of the first substrate 522, as in the electrode assembly 410 of FIG. 4.

According to some embodiments of the present disclosure, the second adhesive coating layer 560 may induce relatively improved insulating properties between the first substrate 522 and the case, as well as relatively improved physical adhesion between the first electrode 520 and the case exterior material 550, to reduce deformation of the first electrode 520 even in high temperature environments.

According to some embodiments, the second adhesive coating layer 560, together with the first adhesive coating layer 540 and the separator 510 positioned on opposite sides of the first substrate 522, may prevent or reducing instances of the first active material coating portion 524 being exposed to the outside, thereby preventing or reducing instances of short circuits occurring due to warping of the electrode assembly during charging and discharging.

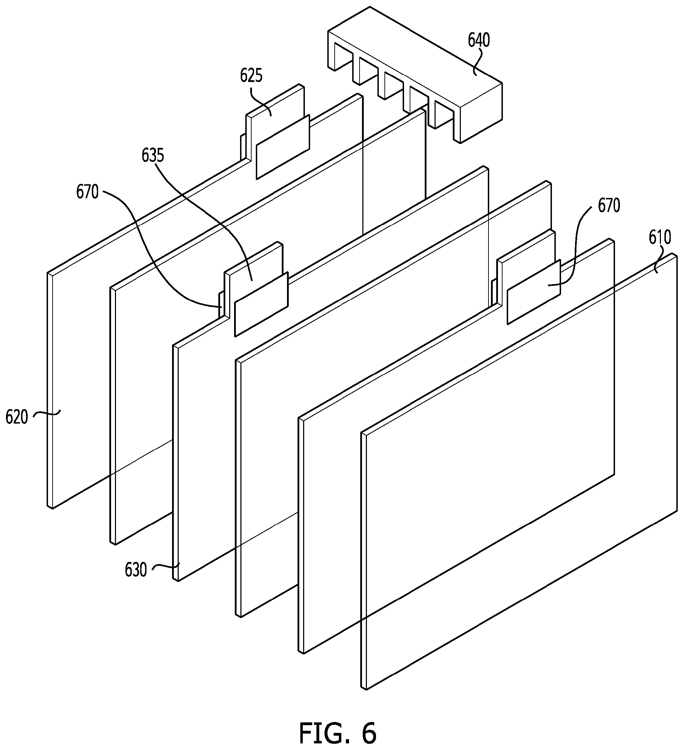

FIG. 6 illustrates an exploded view showing an electrode assembly and third adhesive coating layers 670 according to some embodiments of the present disclosure.

Referring now to FIG. 6, the electrode assembly according to some embodiments of the present disclosure may further include third adhesive coating layers 670. The third adhesive coating layers 670 may be located adjacent to at least one of an extension of the first electrode tab 625 or an extension of the second electrode tab 635. Here, the extensions may refer to a connecting portion that the first electrode tab 625 begins to form by extending from the first electrode 620 or a connecting portion that the second electrode tab 635 begins to form by extending from the second electrode 630. The extensions may include a portion of the upper outer periphery of the first electrode 620 or a portion of the upper outer periphery of the second electrode 630.

As shown in FIG. 6, it may be desirable to dispose the third adhesive coating layers 670 on opposite surfaces of the extension of the first electrode tab 625 or the extension of the second electrode tab 635 for insulating and bonding the first electrode 620 or the second electrode 630.

According to some embodiments, the third adhesive coating layers 670 may be located between the extension of the first electrode tab 625 and the separator 610. The third adhesive coating layers 670 may also be located between the extension of the second electrode tab 635 and the separator 610.

According to some embodiments of the present disclosure, the third adhesive coating layers 670 may induce an improvement in insulating properties between the first electrode 620 and the separator 610, as well as an improvement in physical adhesion between the first electrode 620 and the separator 610, to reduce deformation of the first electrode 620 and the first electrode tab 625 even in high temperature environments. Similarly, the third adhesive coating layers 670 may induce an improvement in insulation properties between the second electrode 630 and the separator 610, as well as an improvement in physical adhesion between the second electrode 630 and the separator 610, to reduce deformation of the second electrode 630 and the second electrode tab 635 even in high temperature environments.

The third adhesive coating layers 670 may include a polymeric material that has adhesive properties in a case of being heated in the same manner as the first adhesive coating layer 640 or the second adhesive coating layer described above. According to some embodiments, the third adhesive coating layers 670 may include an ionomer. The composition and properties of the ionomer are the same as described above.

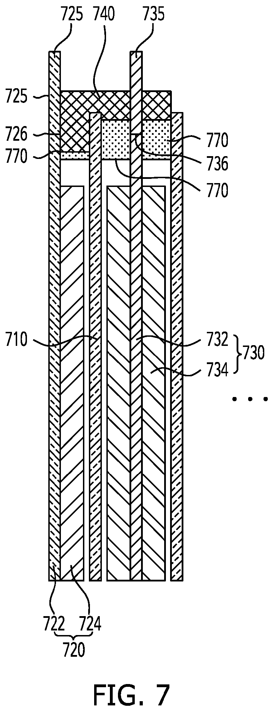

FIG. 7 illustrates a plan view showing the cross-section of an electrode assembly and third adhesive coating layers 770 according to some embodiments of the present disclosure. FIG. 8 illustrates a top plan view showing the electrode assembly according to some embodiments.

Referring to FIG. 7, the third adhesive coating layers 770 may be located adjacent to at least one of an extension positioned between the first substrate 722 of the first electrode 720 or the first electrode tab 725 or an extension positioned between the second substrate 732 of the second electrode 730 and the second electrode tab 735. In FIG. 7, the third adhesive coating layers 770 located on the extension of the first electrode tab 725 is shown as being located behind the first adhesive coating layer 740 and the third adhesive coating layers 770 located on the extension of the second electrode tab 735 is shown as being arranged before the second adhesive coating layer 740. However, this is not intended to be limiting, and the arrangement may be changed to the extent that the third adhesive coating layers 770 do not overlap each other, as selected by a person skilled in the art.

The third adhesive coating layers 770 may be shaped to cover the first active material coating portion or layer 724 or the second active material coating portion or layer 734, as well as the first adhesive coating layer 740 and the separator 710 arranged not to overlap the third adhesive coating layers 770 and each other. Accordingly, the first active material coating portion or layer 724 or the second active material coating portion or layer 734 may be prevented from being exposed to the outside and short circuits may be prevented from occurring due to warping during charging and discharging of the electrode assembly.

Referring to FIG. 8, a first adhesive coating layer 840 may be shaped to partially cover the upper portion of the separator 810 and span the upper portion of a first electrode 820 and the upper portion of a second electrode 830. The first adhesive coating layer 840 may bond and insulate a portion of the upper outer periphery of a first substrate 822 and the upper portion of a separator 810 to and from each other and a portion of the upper outer periphery of the second substrate 832 and the upper portion of the separator 810 to and from each other using protrusions and grooves having adhesive properties. On at least one side of the second substrate 832, an active material coating portion or layer 834 may be arranged.

A second adhesive coating layer 860 may be located between the first substrate 822 included in the first electrode 820 and a case exterior material 850 to bond and insulate the two components to and from each other. According to some embodiments, the second adhesive coating layer 860 may be located on at least a portion of the outer periphery of the first substrate 822 and may not be located on the first electrode tab 825 extending from the first substrate 822. The first active material coating portion 824 may not be provided on a surface of the first substrate 822 where the second adhesive coating layer 860 is located, because the first active material may not be applied to the surface of the first substrate 822.

The third adhesive coating layer 870 may be located between the extension of the first electrode tab 825 and the separator 810 to bond and insulate the two components to and from each other. According to some embodiments, the third adhesive coating layer 870 may be located between the extension of the second electrode tab 835 and the separator 810 to adhere and insulate the two components to and from each other. All of the first adhesive coating layer 840, the second adhesive coating layer 860, and the third adhesive coating layer 870 may be arranged not to overlap each other while being adjacent to the upper portion of the separator 810, the upper portion of the first electrode 820, and the upper portion of the second electrode 830.

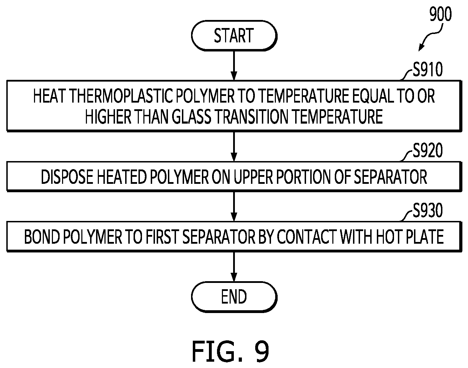

FIG. 9 illustrates a flowchart showing an example of a method of manufacturing an electrode assembly according to some embodiments of the present disclosure. Although FIG. 9 illustrates various operations in a method of manufacturing an electrode assembly, embodiments according to some embodiments of the present disclosure are not limited thereto, and according to various embodiments, the method may include additional operations or fewer operations, or the order of operations may vary, unless otherwise stated or implied, without departing from the scope of embodiments according to some embodiments of the present disclosure.

Referring now to FIG. 9, an electrode assembly manufacturing method 900 according to some embodiments may begin with heating a thermoplastic polymer to a temperature equal to or higher than a glass transition temperature in S910. As used herein, the thermoplastic polymer may refer to a material of the polymeric material including the adhesive coating layer described above that has not yet been heated. According to some embodiments, the thermoplastic polymer may include an ionomer prior to formation of ionic crosslinks by heating.

Thereafter, the heated polymer may be located on the upper portion of a separator in S920. According to some embodiments, the operation of placing the thermoplastic polymer on the upper portion of the separator may include extruding the heated polymer onto the upper portion of the first electrode using a nozzle and stacking the separator on a first electrode.

Thereafter the polymer may be bonded to the first separator by contact with a hot plate in S930. In this case, the hot plate may be pressed to further facilitate bonding the polymer to the separator.

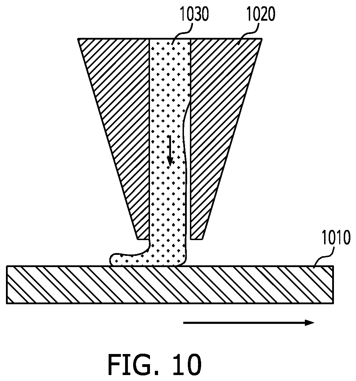

FIGS. 10 to 12 illustrate cross-sectional views showing an example of a polymer extrusion method according to some embodiments of the present disclosure.

Referring to FIG. 10, the heated thermoplastic polymer 1030 may be extruded onto the upper portion of the first electrode 1010 using the nozzle 1020. Here, the nozzle 1020 may be maintained at a high temperature to maintain the temperature of the thermoplastic polymer 1030 above the glass temperature until just prior to extrusion. Depending on the position of the upper portion of the first electrode 1010 onto which the thermoplastic polymer 1030 is extruded, different adhesive coating layers may be produced.

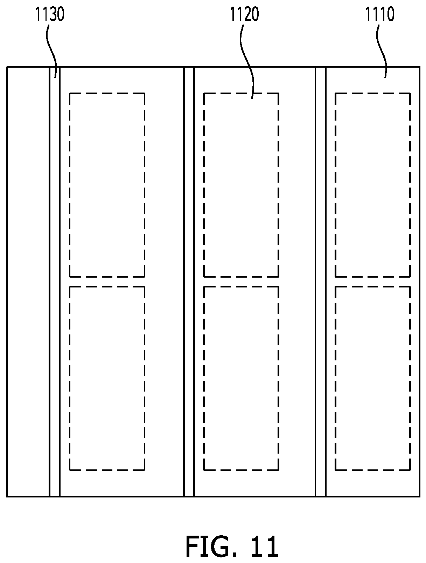

FIG. 11 illustrates an example of a method of manufacturing second adhesive coating layers according to some embodiments of the present disclosure.

Referring to FIG. 11, the first electrode may include a first substrate 1110 located on the outer portion of the electrode assembly and a first active material 1120 applied to an inner surface of the first substrate 1110. The inner surface of the first substrate 1110 may correspond to the lower surface in the view of FIG. 11. According to some embodiments, the first electrode may be manufactured by notching the first substrate 1110 along the shape of the application of the first active material 1120.

According to some embodiments, in the operation of extruding the heated polymer 1130 onto the upper portion of the first electrode using a nozzle, the polymer 1130 may be extruded onto at least a portion of the outer periphery of the first substrate 1110. Here, the polymer 1130 may be extruded onto a surface opposite the surface to which the first active material 1120 is applied. As shown, the polymer 1130 may be extruded to form a single line on the upper portion of the outer periphery of the first substrate 1110 to form a second adhesive coating layer over the entire outer periphery of the upper portion at the first electrode.

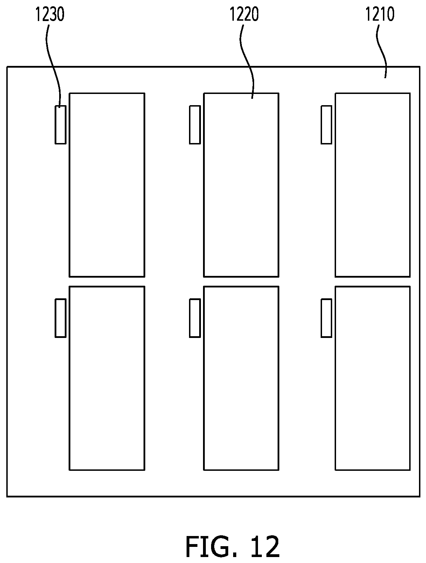

FIG. 12 illustrates an example of a process of manufacturing third adhesive coating layers according to some embodiments of the present disclosure.

The first electrode may include a first substrate 1210, a first active material 1220 applied to an inner surface of the first substrate 1210, a first electrode tab extending from an upper outer periphery of the first substrate 1210, and extensions of the first electrode tab. Referring to FIG. 12, in the operation of extruding the heated polymer 1230 onto the upper portion of the first electrode using a nozzle, the polymer 1230 may be extruded onto the extension of the first electrode tab.

Herein, the polymer 1230 may be extruded onto the surface to which the first active material 1220 is applied. As shown, the polymer 1230 may be selectively extruded from the first substrate 1210 onto regions corresponding to the extensions of the first electrode tab to form third adhesive coating layers on the first electrode.

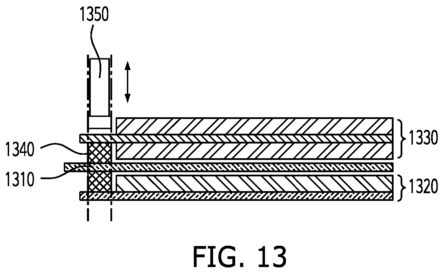

FIG. 13 illustrates an example of the contacting operation of the method of manufacturing an electrode assembly according to some embodiments of the present disclosure.

Referring to FIG. 13, according to some embodiments, a polymer 1340 may be attached to a separator 1310 by contact with a hot plate 1350 for a few seconds to manufacture the electrode assembly. Here, the temperature of the plate may be equal to or higher than the glass transition temperature Tg of the polymer 1340. According to some embodiments, the temperature of the plate may be between 100°C and 150°C, at which the polymer 1340 applied to the upper portion of first electrodes 1320 or the upper portion of second electrodes 1330 may be heated to form ionic cross-links.

Referring to FIG. 13, the width of the plate 1350 may correspond to the width of the first adhesive coating layer on which the polymer 1340 is located. This may allow only the polymer 1340 located on the electrode to be heated without heating the active material or other insulators present on the electrode. In some embodiments, the polymer may be pressed with the plate 1350 to facilitate bonding the polymer 1340 to the separator 1310.

In FIG. 13, the plate 1350 is shown as moving up and down and contacting the first electrodes 1320 or the second electrodes 1330 around the polymer 1340, but the method of contact is not limited thereto. According to some embodiments, the hot plate 1350 may have the shape of two pressing rollers and a portion of the electrode assembly may be inserted between and brought into contact with the pressing rollers.

The process of contact with the hot plate 1350 for a few seconds may occur not only in the electrode assembly in which the first electrodes 1320 and the second electrodes 1330 are stacked, but also after the electrode assembly is inserted into a case exterior material.

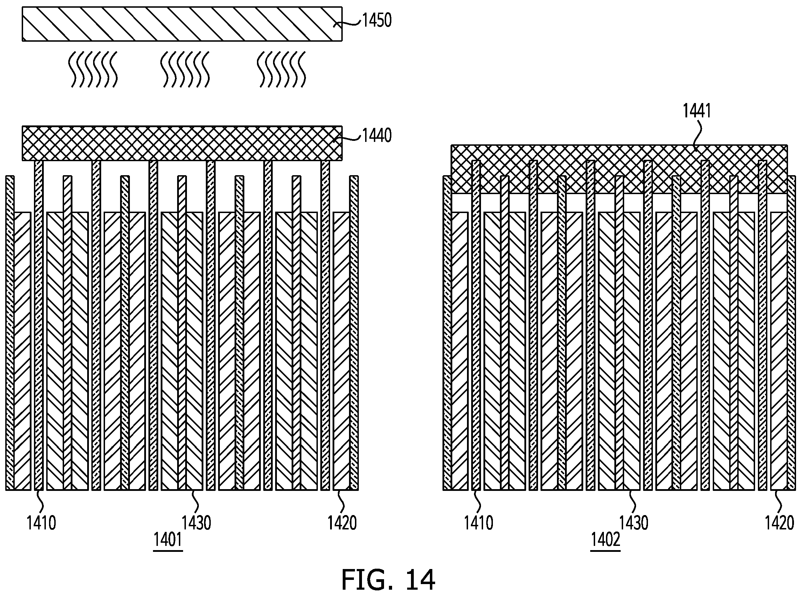

FIG. 14 illustrates an example of the heating operation of the method of manufacturing an electrode assembly according to some embodiments of the present disclosure.

Referring to FIG. 14, a first operation 1401 illustrates an electrode assembly prior to heating, and a second operation 1402 illustrates the electrode assembly after heating. The operation of heating the thermoplastic polymer 1440 to a temperature equal to or higher than the glass transition temperature may include applying hot air to the polymer 1440 by a hot air generator 1450.

According to some embodiments, the polymer 1440 may be in the shape of a film including flat surfaces prior to being heated. The film-shaped polymer may be arranged over the upper portion of the separator 1410, the upper portion of the first electrode 1420, and the upper portion of the second electrode 1430 and be exposed to the hot air from the hot air generator 1450 having a temperature equal to or higher than the glass transition temperature.

The polymer 1440 may be heated by the hot air to a temperature equal to or higher than the glass transition temperature and transformed into a material having adhesive properties and high processability. Using this, the film-shaped polymer 1440 may form a first adhesive coating layer 1441 having a three-dimensional structure over the upper portion of the separator 1410, the upper portion of the first electrode 1420, and the upper portion of the second electrode 1430.

A secondary battery according to some embodiments of the present disclosure intended to overcome the technical problems includes an electrode assembly according to some embodiments of the present disclosure. According to some embodiments, the secondary battery may include the electrode assembly described above and a case accommodating the electrode assembly. The electrode assembly may include a first electrode, a second electrode, and a separator provided between the first electrode and the second electrode, as described above. The first electrode, the second electrode, and the separator may be impregnated with an electrolyte.

The case forms the overall contour of the secondary battery and may be formed of a conductive metal, such as aluminum, an aluminum alloy, a stainless material (e.g., SUS), or nickel-plated steel, a polymer, or the like. The case may also provide a space in which the electrode assembly is accommodated. According to some embodiments, in a case where the secondary battery is a pouch battery, the case may have the shape of a pouch.

Although the electrode assembly is shown in the drawings as a stack of cells of a pouch battery for the purpose of illustrating the invention, the scope of the present disclosure is not limited thereto and includes not only pouch batteries with stacked cells (or electrode assemblies), but also secondary batteries of any shape, such as pouch batteries each having a wound-up jelly roll (or an electrode assembly), prismatic batteries, coin batteries, and the like. A secondary battery according to an implementation of the present disclosure may be used in automobiles, cell phones, and/or various other types of electrical/electronic devices, and the present disclosure is not limited thereto.

According to some embodiments of the present disclosure, the adhesive coating layer may be arranged around the first electrode, the second electrode, and the separator to prevent or reduce instances of cracks occurring in the separator or the like. Although only one adhesive coating layer is shown in some drawings, one or more adhesive coating layers may be provided in different places at the same time (or substantially at the same time) as needed, and the number of adhesive coating layers is not limited to any particular number.

According to some embodiments of the present disclosure, the longevity of the secondary battery may also be positively influenced by improved thermal stability of the electrode assembly and improved adhesion characteristics near the tabs.

According to some embodiments of the present disclosure, the adhesive coating layer may relatively improve the adhesion between the separators and compensate for or eliminate stepped portions that may be formed during the manufacturing of the electrode assembly, thereby relatively improving the flatness of the secondary battery so that pressure may be uniformly applied to the secondary battery in the subsequent process or the like.

Although aspects of some embodiments of the present disclosure has been described above with respect to embodiments thereof, embodiments according to the present disclosure are not limited thereto. Various modifications and variations can be made thereto by those skilled in the art within the spirit of the present disclosure and the equivalent scope of the appended claims, and their equivalents.

## Claims

1. An electrode assembly (100) comprising:
a separator (110, 210);
a first electrode (120,220) arranged on a first side surface (212) of the separator (110, 210);
a first electrode tab (125) extending from an upper outer periphery of the first electrode (120, 220);
a second electrode (130, 230) arranged on a second side (214) surface of the separator (110, 210) opposite to the first side surface (212);
a second electrode tab (135) extending from an upper outer periphery of the second electrode (130, 230); and
a first adhesive coating layer (140, 240),
wherein the first adhesive coating layer (140, 240) at least partially covers an upper portion (224) of the separator (110, 210).

2. The electrode assembly (100) as claimed in claim 1, wherein the first adhesive coating layer (140, 240) comprises an ionomer.

3. The electrode assembly (100) as claimed in claim 2, wherein the ionomer comprises a copolymer of ethylene and methyl acrylic acid.

4. The electrode assembly (100) as claimed in claim 2, wherein a glass transition temperature of the ionomer ranges from 100°C to 150°C.

5. The electrode assembly (100) as claimed in any of claims 1 to **4,** wherein the first electrode (220) comprises a first substrate (222) on an outer side surface of the electrode assembly (100) and a first active material (224) applied to an inner surface of the first substrate (222), and wherein
the first substrate (222) is arranged adjacent to a case exterior material (250).

6. The electrode assembly (410, 420) as claimed in claim 5, further comprising a second adhesive coating layer (417, 427),
wherein the second adhesive coating layer (417, 427) is arranged between at least a portion of an outer periphery of the first substrate (412, 422) and the case exterior material (250).

7. The electrode assembly (100) as claimed in any of claims 1 to 6, wherein the first adhesive coating layer (240) is arranged between an upper portion of the first side surface (212) of the separator (210) and an upper portion of an inner surface of the first substrate (222).

8. The electrode assembly (100) as claimed in any of claims 1 to 7, wherein the second electrode (230) comprises a second substrate (232) on an inner portion of the electrode assembly (100) and a second active material applied to two side surfaces of the second substrate (222).

9. The electrode assembly (100) as claimed in claim 8, wherein the first adhesive coating layer (240) is arranged between an upper portion of the second side surface (214) of the separator (210) and an upper portion of an inner surface of the second substrate (232).

10. The electrode assembly (100) as claimed in any of claims 1 to 9, further comprising a third adhesive coating layer (670),
wherein the third adhesive coating layer (670) is arranged adjacent to an extension of the first electrode tab (625) and/or an extension of the second electrode tab (635).

11. The electrode assembly (100) as claimed in claim 10, wherein the third adhesive coating layer (770) is arranged between the extension of the first electrode tab (725) and the separator (710).

12. The electrode assembly (100) as claimed in claim 10, wherein the third adhesive coating layer (770) is arranged between the extension of the second electrode tab (735) and the separator (710).

13. A secondary battery comprising the electrode assembly (100) as claimed in any of the previous claims.

14. A method (900) of manufacturing an electrode assembly (100), the method (900) comprising:
heating (S910) a thermoplastic polymer (1030) to a temperature equal to or higher than a glass transition temperature;
arranging (S920) the heated thermoplastic polymer (1030) on an upper portion of a separator (1310); and
attaching (S930) the thermoplastic polymer (1230) to the separator (1310) by contact with a hot plate (1350).

15. The method (900) as claimed in claim **14,** wherein arranging (S920) the heated thermoplastic polymer (1340) on the upper portion of the separator (1310) comprises:
extruding the heated thermoplastic polymer (1030) onto an upper portion of a first electrode (1010) using a nozzle (1020); and
stacking the separator (1310) on the first electrode (1010).
